# EUROPEAN PATENT APPLICATION

(11) **EP 4 205 944 A1**
(43) Date of publication of application: **05.07.2023**
(21) Application number: 22215885.9
(22) Date of filing: 22.12.2022
(51) Int. Cl.: B29C 48/37, B29C 48/94, B29C 48/375, B29C 48/285, F04C 2/14, F04C 15/00

(54) **GEAR PUMP FOR RUBBER COMPOSITION AND RUBBER MEMBER**

(30) Priority: 28.12.2021 JP 2021214756
(71) Applicant: Sumitomo Rubber Industries, Ltd., Kobe-shi, Hyogo-ken 651-0072 (JP)
(72) Inventor: HOSHI, Tatsumi, Kobe-shi, Hyogo-ken 651-0072 (JP)
(74) Representative: Manitz Finsterwald Patent- und Rechtsanwaltspartnerschaft mbB

(57) **Abstract**

Provided are a gear pump, for a rubber composition, capable of inhibiting a rubber composition from being burned on an inner circumferential surface of a bush ring, and a rubber member forming device including the gear pump for a rubber composition. The gear pump for a rubber composition includes: a pair of gears configured to transfer the rubber composition and mesh with each other; and a bush ring configured to have an inner circumferential surface and fit to a support shaft of each of the gears so as to allow the support shaft to be rotatable. The inner circumferential surface has a lubricating groove and an auxiliary groove for allowing the rubber composition to enter a fitting portion at which the support shaft and the inner circumferential surface fit to each other. The lubricating groove has one end opened on the gear side in order to introduce the rubber composition. The auxiliary groove has both ends on the inner circumferential surface, and has an introduction port that allows the rubber composition to be introduced into the auxiliary groove through the lubricating groove. The rubber member forming device includes the gear pump for a rubber composition.

## Description

### BACKGROUND OF THE INVENTION

### Field of the Invention

The present invention relates to a gear pump for a rubber composition and a rubber member forming device.

### Background Art

In general, various strip-shaped rubber members having different cross-sectional shapes are used for a pneumatic tire. The strip-shaped rubber members are formed by using a rubber member forming device that includes a gear pump to which a head having a forming outlet port is attached (see Japanese Laid-Open Patent Publication No. 2017-106407).

The gear pump includes a pair of gears that are stored in a gear pump case and that mesh with each other. The support shafts of the pair of gears are supported by a bush ring which has a shape of a figure eight, has two inner circumferential surfaces, and fits to the support shafts so as to allow the support shafts to be rotatable. The support shaft rotates in a state where the support shaft is very close to the inner circumferential surface. Therefore, a fitting portion at which the support shaft and the inner circumferential surface fit to each other may be in a high temperature state.

A self-lubricating type bush ring that has, at the inner circumferential surface of the bush ring, a lubricating groove which extends along the axis of the support shaft and which is opened on the gear side in order to inhibit the high-temperature state, has been known. In the self-lubricating type bush ring, an object such as water or oil to be transferred by the gear pump is supplied into the lubricating groove. The to-be-transferred object supplied into the lubricating groove enters the fitting portion at which the support shaft and the inner circumferential surface fit to each other, and functions as a lubricant. Thus, the fitting portion can be inhibited from being in the high-temperature state.

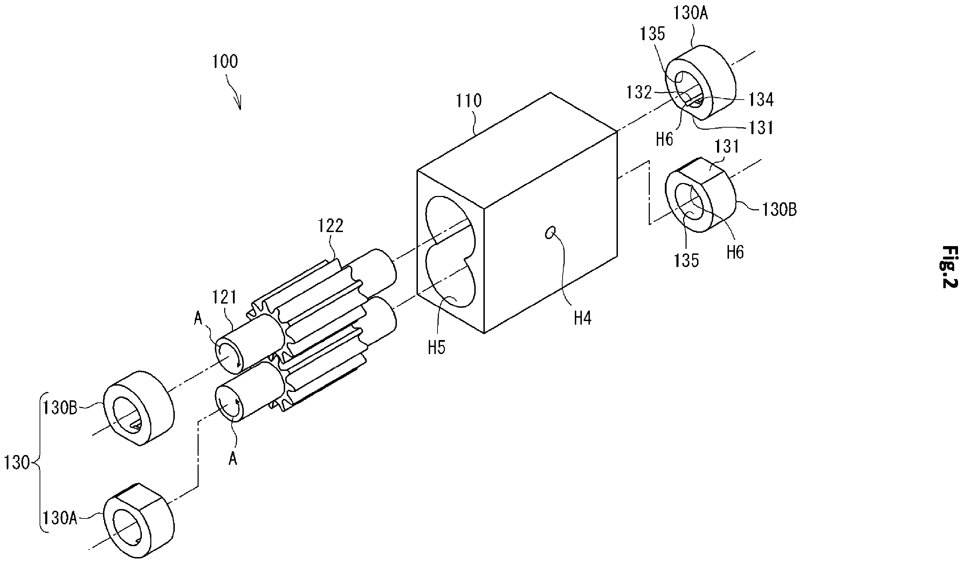

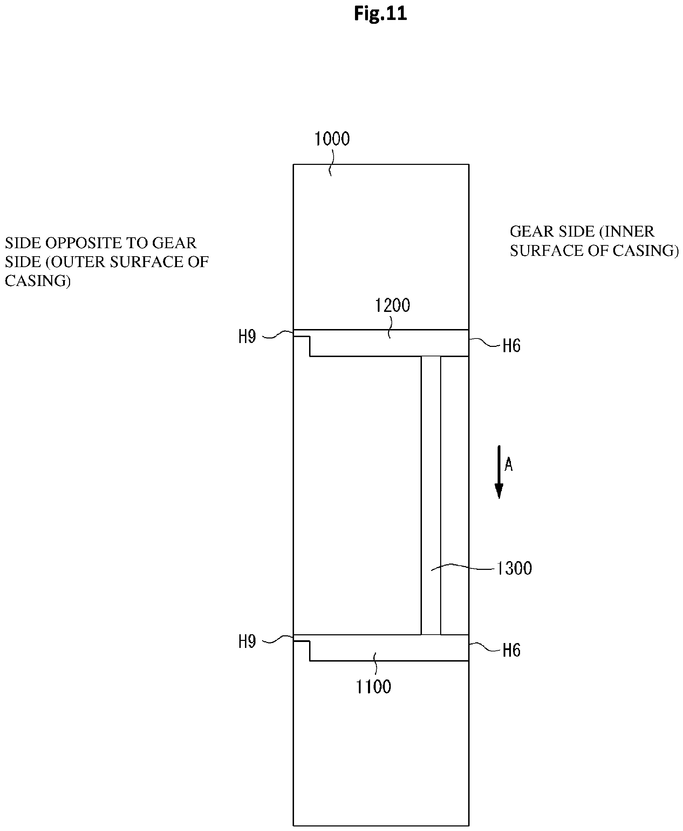

Japanese Laid-Open Patent Publication No. H11-50973 discloses a bush ring 1000 which has grooves illustrated in FIG. 11 at the inner circumferential surface, in a gear pump that has a self-lubricating function and can perform efficient cooling. FIG. 11 is a schematic diagram illustrating, on a plane, the inner circumferential surface of the bush ring 1000 disclosed in Japanese Laid-Open Patent Publication No. H11-50973. In FIG. 11, the right side of the surface of the drawing sheet represents a gear side, and the left side thereof represents the side opposite to the gear side. As illustrated in FIG. 11, the bush ring 1000 disclosed in Japanese Laid-Open Patent Publication No. H11-50973 has a passage (outlet-side lubricating groove) 1100, an auxiliary passage (auxiliary lubricating groove) 1200, and a ring groove 1300 (see claim 1 and FIG. 2 in Japanese Laid-Open Patent Publication No. H11-50973). The passage 1100 and the auxiliary passage 1200 each have an opening H6 at the termination end on the gear side, and a narrow groove opening H9 at the termination end on the side opposite to the gear side. The ring groove 1300 extends on a part of the circumference along the circumferential direction so as to connect a part of the passage 1100 and a part of the auxiliary passage 1200 to each other.

As in the bush ring of the conventional gear pump as described above, also in a bush ring of a gear pump of a rubber member forming device, a fitting portion at which a support shaft and an inner circumferential surface fit to each other may be in a high-temperature state. The gear pump of the rubber member forming device has a problem that a rubber composition as a lubricant entering the fitting portion may be hardened due to the high temperature and burned(scorched) onto the inner circumferential surface. Particularly, an easily-burnable rubber composition of which the vulcanization speed is high tends to be easily burned onto the inner circumferential surface. The rubber composition burned onto the inner circumferential surface increases friction at the fitting portion. The increase of the friction may cause increase of a driving torque of a motor or damage to the machine. Therefore, the gear pump of the rubber member forming device needs to be frequently disassembled for maintenance. As a result, the gear pump of the rubber member forming device may increase a burden on an operator and maintenance cost as compared with conventional gear pumps.

An object of the present invention is to provide a gear pump, for a rubber composition, which can inhibit the rubber composition from being burned onto an inner circumferential surface of a bush ring, and a rubber member forming device that includes the gear pump for a rubber composition.

### SUMMARY OF THE INVENTION

The present invention is directed to a gear pump for a rubber composition and a rubber member forming device including the gear pump for a rubber composition. The gear pump includes: a pair of gears configured to transfer the rubber composition and mesh with each other; and a bush ring configured to have an inner circumferential surface and fit to a support shaft of each of the gears so as to allow the support shaft to be rotatable. The inner circumferential surface has a lubricating groove and an auxiliary groove for allowing the rubber composition to enter a fitting portion at which the support shaft and the inner circumferential surface fit to each other. The lubricating groove has one end opened on the gear side in order to introduce the rubber composition. The auxiliary groove has both ends on the inner circumferential surface, and has an introduction port that allows the rubber composition to be introduced into the auxiliary groove through the lubricating groove.

The gear pump for a rubber composition according to the present invention can inhibit a rubber composition from being burned onto the inner circumferential surface of the bush ring. Particularly, for an easily burnable rubber composition, the gear pump for a rubber composition according to the present invention can effectively inhibit the rubber composition from being burned. Thus, the gear pump for a rubber composition according to the present invention allows the number of times of disassembly for maintenance to be reduced. As a result, a burden on an operator and maintenance cost are reduced.

### BRIEF DESCRIPTION OF THE DRAWINGS

FIG. 1 is a schematic diagram illustrating a rubber member forming device according to a first embodiment of the present invention;
FIG. 2 is a schematic diagram illustrating a gear pump according to the first embodiment of the present invention;
FIG. 3 is a schematic diagram illustrating a bush ring according to the first embodiment of the present invention;
FIG. 4 is a cross-sectional view of the bush ring illustrated in FIG. 3 as taken along a line X-X;
FIG. 5 is a schematic diagram illustrating, in a plan view, an inner circumferential surface of the bush ring according to the first embodiment of the present invention:
FIG. 6 is a schematic diagram illustrating, in a plan view, an inner circumferential surface of a bush ring according to a second embodiment of the present invention;
FIG. 7 is a schematic diagram illustrating, in a plan view, an inner circumferential surface of a bush ring according to a third embodiment of the present invention;
FIG. 8 illustrates the principle of a force acting on a support shaft in the gear pump for a rubber composition;
FIG. 9 is a schematic diagram illustrating a bush ring according to a fourth embodiment of the present invention;
FIG. 10 is a schematic diagram illustrating, in a plan view, an inner circumferential surface of the bush ring according to the fourth embodiment of the present invention; and
FIG. 11 is a schematic diagram illustrating, in a plan view, an inner circumferential surface of a bush ring disclosed in Japanese Laid-Open Patent Publication No. H11-50973.

### DETAILED DESCRIPTION

The present invention will be described below in detail with appropriate reference to the drawings based on preferred embodiments.
(1) A gear pump for a rubber composition according to one embodiment of the present invention includes:
   a pair of gears configured to transfer the rubber composition and mesh with each other; and
   a bush ring configured to have an inner circumferential surface and fit to a support shaft of each of the gears so as to allow the support shaft to be rotatable, in which
   the inner circumferential surface has a lubricating groove and an auxiliary groove for allowing the rubber composition to enter a fitting portion at which the support shaft and the inner circumferential surface fit to each other,
   the lubricating groove has one end opened on the gear side in order to introduce the rubber composition, and
   the auxiliary groove has both ends on the inner circumferential surface, and has an introduction port that allows the rubber composition to be introduced into the auxiliary groove through the lubricating groove.
   The gear pump for a rubber composition according to the above described (1) can inhibit a rubber composition from being burned onto the inner circumferential surface of the bush ring.
(2) In the gear pump for a rubber composition according to the above-described (1),
   the lubricating groove extends in an axial direction of the support shaft and has another end on the inner circumferential surface, and
   the gear pump further includes a connecting groove that connects between a part of the lubricating groove and the introduction port.
(3) In the gear pump for a rubber composition according to the above-described (2), the number of the connecting grooves is greater than or equal to two.
(4) In the gear pump for a rubber composition according to any one of the above-described (1) to (3),
   a reference position is a position, on the inner circumferential surface, at which a plane having, at both ends, an axis of the support shaft of one of the pair of gears and an axis of the support shaft of the other of the pair of gears intersects the inner circumferential surface, and
   the auxiliary groove is formed at the inner circumferential surface at a position where a central angle is greater than or equal to 40° and less than or equal to 60°, around an axis of the support shaft that fits to the inner circumferential surface, in a direction opposite to a direction in which the gears rotate, when the reference position represents 0°.
(5) In the gear pump for a rubber composition according to any one of the above-described (1) to (3),
   a reference position is a position, on the inner circumferential surface, at which a plane having, at both ends, an axis of the support shaft of one of the pair of gears and an axis of the support shaft of the other of the pair of gears intersects the inner circumferential surface, and
   the auxiliary groove is formed at the inner circumferential surface at a position where a central angle is greater than or equal to 120° and less than or equal to 140°, around an axis of the support shaft that fits to the inner circumferential surface, in a direction in which the gears rotate, when the reference position represents 0°.
(6) In the gear pump for a rubber composition according to any one of the above-described (1) to (5), the number of the auxiliary grooves is greater than or equal to two.
   The gear pump for a rubber composition according to (2) to (6) can further inhibit a rubber composition from being burned onto the inner circumferential surface of the bush ring.
(7) In the gear pump for a rubber composition according to any one of the above-described (1) to (6), the bush ring is formed of four bush rings for fitting to four support shafts, respectively, of the pair of gears.
   In the gear pump for a rubber composition according to (7), the bush ring can be repaired or replaced for each of the four bush rings. Therefore, maintenance cost is further reduced.
(8) A rubber member forming device for forming a strip-shaped rubber member used for producing a tire, according to another embodiment of the present invention, incudes:
   an extruder;
   the gear pump for a rubber composition according to any one of the above-described (1) to (7), the gear pump being disposed downstream of the extruder; and
   a head disposed downstream of the gear pump for a rubber composition, in which
   the extruder has a screw, and the extruder is configured to supply the rubber composition toward the gear pump for a rubber composition while kneading the rubber composition, by rotating the screw, and
   the head has an outlet port, and the head is configured to process the rubber composition to form the strip-shaped rubber member by causing the rubber composition to pass through the outlet port.

The rubber member forming device according to (8) includes the gear pump for a rubber composition according to any one of the above-described (1) to (7). Therefore, a rubber composition can be inhibited from being burned onto the inner circumferential surface of the bush ring of the gear pump for a rubber composition.

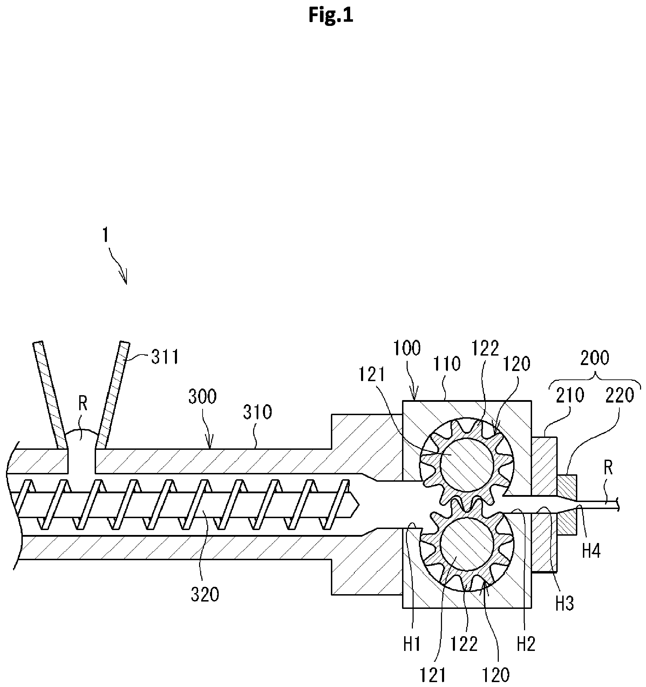

FIG. 1 is a schematic diagram illustrating a rubber member forming device 1 according to a first embodiment of the present invention. R, illustrated in FIG. 1, represents a rubber composition. In FIG. 1, the rubber composition R is moved from the left side of the surface of the drawing sheet toward the right side thereof. In FIG. 1, the left side represents the upstream side of the rubber member forming device 1. The rubber composition R is moved from the upstream side toward the downstream side in the rubber member forming device 1, and is discharged from a discharge outlet H4 disposed at an outlet port 220 of a head 200 described below.

The rubber member forming device 1 includes an extruder 300, a gear pump 100, and the head 200. The gear pump 100 is disposed downstream of the extruder 300. The head 200 is disposed downstream of the gear pump 100.

The extruder 300 includes a cylinder 310 and a screw 320. An inlet 311 is disposed at the cylinder 310. The rubber composition R is put into the extruder 300 from the inlet 311. The screw 320 is rotated by not-illustrated driving means. Thus, the rubber composition R is kneaded and transferred toward the downstream side. That is, the extruder 300 is configured to transfer the rubber composition R toward the downstream side while kneading the rubber composition R by rotation of the screw 320.

The gear pump 100 includes a casing 110, a pair of gears 120, and a bush ring 130 described below. The casing 110 includes a supply port denoted by H1 and a discharge port denoted by H2. Each of the gears 120 is stored in the casing 110. The pair of gears 120 each include a support shaft 121 and multiple teeth 122. The support shaft 121 fits to an inner circumferential surface 135 of the bush ring 130 described below, and is rotatably supported. The teeth 122 are disposed along the circumference of each gear 120 so as to be spaced from each other. As is apparent from FIG. 1, the gears 120 are configured such that the teeth 122 of one of the gears 120 mesh with the teeth 122 of the other of the gears 120.

The gear pump 100 includes not-illustrated driving means. The driving means rotates one of the gears 120. The pair of gears 120 disposed in the gear pump 100 mesh with each other. Therefore, rotation of one of the gears 120 causes rotation of the other of the gears 120. Thus, the rubber composition R flowing from the extruder 300 into the supply port H1 is sent to the discharge port H2. The rubber composition R is supplied to the head 200 disposed downstream of the gear pump 100. That is, the gear pump 100 is configured to supply the rubber composition R to the head 200 by rotating the pair of gears 120 which mesh with each other.

The head 200 includes a block-like body 210 and the outlet port 220. The body 210 forms an upstream-side portion of the head 200. The body 210 is disposed downstream of the gear pump 100. The body 210 is mounted to the gear pump 100 so as to be replaceable. In the body 210, a hole denoted by H3 extends from the upstream side toward the downstream side. The rubber composition R supplied from the gear pump 100 passes through the hole H3. The outlet port 220 is disposed downstream of the body 210. The outlet port 220 is mounted to the body 210 so as to be replaceable. In the outlet port 220, a discharge outlet denoted by H4 extends from the upstream side toward the downstream side. The rubber composition R passing through the hole H3 of the body 210 is discharged from the discharge outlet H4 of the outlet port 220. By discharging the rubber composition R from the discharge outlet H4, the rubber composition R is formed into a strip-shaped rubber member. The thickness of the strip-shaped rubber member is set in a range of 0.4 mm to 6 mm. The width of the strip-shaped rubber member is set in a range of 4 mm to 40 mm.

FIG. 2 is a schematic diagram illustrating the gear pump 100 according to the first embodiment of the present invention. The bush ring 130 includes four bush rings that are two bush rings 130A and two bush rings 130B. The pair of gears 120 stored in the casing 110 each rotate in the direction indicated by an arrow A in FIG. 2. The support shaft 121 of one of the pair of gears 120 fits to the inner circumferential surface 135 of the bush ring 130A, and the support shaft 121 of the other of the pair of gears 120 fits to the inner circumferential surface 135 of the bush ring 130B. Thus, the bush ring 130A and the bush ring 130B are used as a set. The bush ring 130 is fitted into a fitting opening, denoted by H5, disposed in the casing 110 such that an opening H6 of a lubricating groove 132 described below faces toward the gear. When the bush ring 130 has been fitted into the fitting opening H5, a face 131 of the bush ring 130A and a face 131 of the bush ring 130B are disposed so as to oppose each other.

As described above, in the bush ring 130, the bush ring 130A and the bush ring 130B are used as a set. However, similarly to the bush ring described in Background Art, the bush ring 130 may be a bush ring which has a shape of a figure eight and has the bush ring 130A and the bush ring 130B integrated with each other. In the gear pump used for the rubber member forming device, a rubber composition may be burned onto an inner circumferential surface of a bush ring to cause damage to the inner circumferential surface. In the above-described bush ring having a shape of a figure eight, even in a case where one of the two inner circumferential surfaces is damaged and the other thereof is not damaged, the bush ring having the shape of the figure eight needs to be entirely repaired or replaced. Meanwhile, in the gear pump 100, the bush ring 130A and the bush ring 130B are configured as separate components, respectively. Therefore, the bush ring can be repaired or replaced for each damaged bush ring. As a result, maintenance cost is reduced.

The bush ring 130 according to the first embodiment of the present invention has grooves including the lubricating groove 132, an auxiliary groove 133, and a connecting groove 134 as described below, at the inner circumferential surface 135. Not only the bush ring 130A and the bush ring 130B but also the above-described grooves are configured to be mirror-image symmetric with respect to the opposing faces 131 as the mirror surfaces when the bush ring 130 has been fitted into the fitting opening H5. The lubricating groove 132, the auxiliary groove 133, and the connecting groove 134 will be described below by using the bush ring 130A

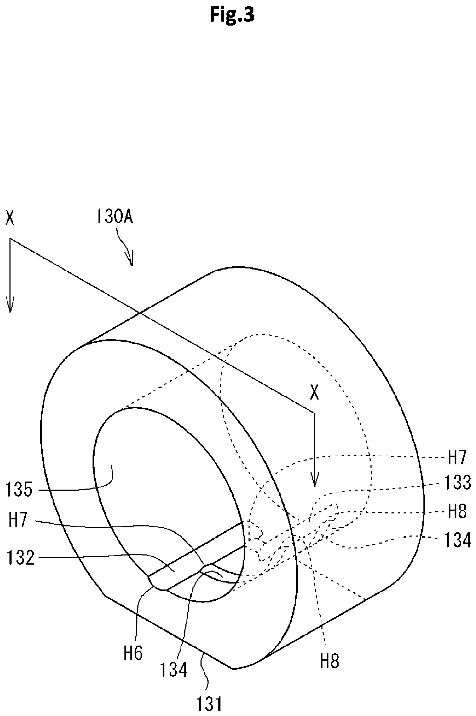

FIG. 3 is a schematic diagram illustrating the bush ring 130A according to the first embodiment of the present invention. The bush ring 130A has the lubricating groove 132, the auxiliary groove 133, and two connecting grooves 134 at the inner circumferential surface 135. The lubricating groove 132 extends at the inner circumferential surface 135 in the axial direction of the above-described support shaft 121. The bush ring 130A is fitted into the fitting opening H5 such that the opening H6 of the lubricating groove 132 is opened on the gear 120 side.
Thus, the rubber composition R on the gear 120 side is introduced through the opening H6 into the lubricating groove 132. The end of the lubricating groove 132 on the side opposite to the opening H6 side is disposed at the inner circumferential surface 135. Both ends of the auxiliary groove 133 are disposed at the inner circumferential surface 135. The auxiliary groove 133 extends parallel to the lubricating groove 132 at the inner circumferential surface 135 in the axial direction of the support shaft 121. The two connecting grooves 134 extend parallel to each other along the circumferential direction of the inner circumferential surface 135. One end of each connecting groove 134 is connected to the lubricating groove 132 at an introduction outlet denoted by H7. The other end of each connecting groove 134 is connected to the auxiliary groove 133 at an introduction port denoted by H8. Thus, the connecting grooves 134 are configured to connect the lubricating groove 132 and the auxiliary groove 133 to each other. Thus, the rubber composition R introduced into the lubricating groove 132 is introduced through the introduction outlet H7 into the connecting groove 134. The rubber composition R introduced into the connecting groove 134 is introduced through the introduction port H8 into the auxiliary groove 133.

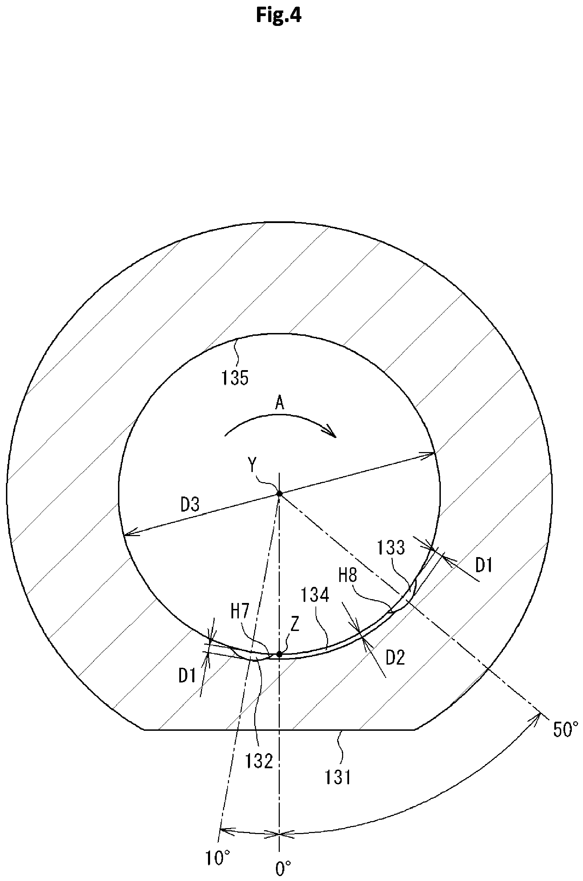

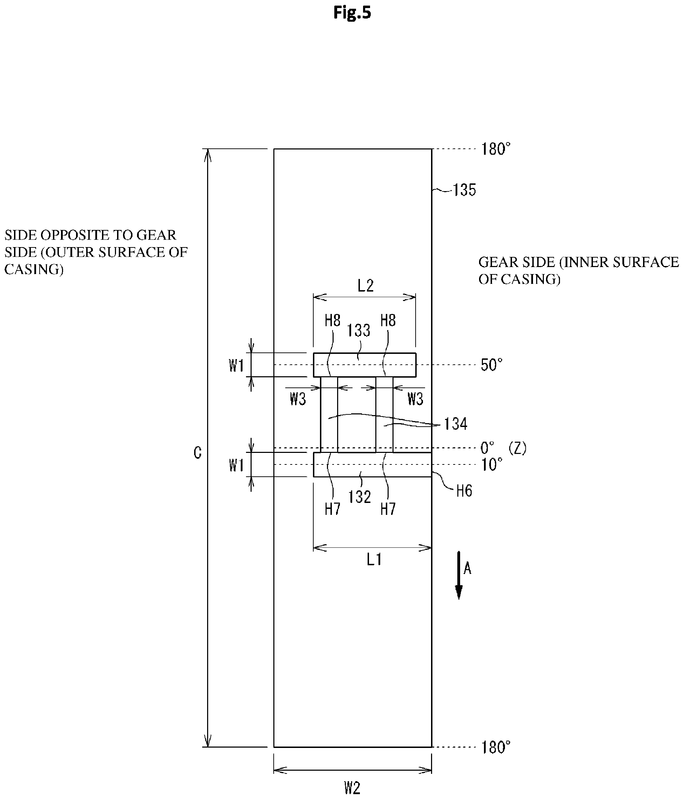

FIG. 4 is a cross-sectional view of the bush ring illustrated in FIG. 3 as taken along a line X-X. The X-X cross-section is a cross-section that passes through the center of a width W3, described below, of the connecting groove 134 disposed on the gear 120 side. FIG. 5 is a schematic diagram illustrating, in a plan view, the inner circumferential surface 135 of the bush ring 130A according to the first embodiment of the present invention. In FIG. 5, the right side of the surface of the drawing sheet represents the gear side (inner side of the casing 110), and the left side thereof represents the side (outer side of the casing 110) opposite to the gear side.

As compared to the grooves of the above-described bush ring 1000 disclosed in Japanese Laid-Open Patent Publication No. H11-50973 as illustrated in FIG. 11, the passage 1100 corresponds to the lubricating groove 132, the auxiliary passage 1200 corresponds to the auxiliary groove 133, and the ring groove 1300 corresponds to the connecting groove 134. Unlike the auxiliary passage 1200, the auxiliary groove 133 has both ends at the inner circumferential surface 135. The auxiliary passage 1200 has the opening H6 on the gear side. Therefore, a to-be-transferred object such as water or oil used for self-lubrication can be supplied also from the opening H6 in addition to the ring groove 1300. Meanwhile, in the present embodiment, the auxiliary groove 133 has no opening on the gear side. Therefore, the rubber composition R is introduced through the connecting groove 134 from the introduction port H8 into the auxiliary groove 133.

A main component of the rubber composition R is natural rubber and synthetic rubber. The rubber composition R has higher viscosity and hardness as compared with water, oil, or the like that is transferred by a standard gear pump. Therefore, the rubber composition R does not easily enter the fitting portion at which the inner circumferential surface of the bush ring and the support shaft of the gear fit to each other, as compared with liquid such as water and oil. The auxiliary passage 1200 disclosed in Japanese Laid-Open Patent Publication No. H11-50973 allows a to-be-transferred object used for self-lubrication to be supplied from the ring groove 1300 and the opening H6 on the gear side. In a case where a to-be-transferred object is water, oil, or the like, the to-be-transferred object easily enters the fitting portion. Thus, the gear pump disclosed in Japanese Laid-Open Patent Publication No. H11-50973 can perform efficient cooling by a self-lubricating function. Meanwhile, in a case where a to-be-transferred object is the rubber composition R, the rubber composition R does not easily enter the fitting portion. Therefore, an amount of the rubber composition R discharged from the opening H6 is increased in the auxiliary passage 1200. As a result, the rubber composition R for exhibiting the self-lubricating function may not sufficiently enter the fitting portion in the bush ring 1000. Thus, the gear pump disclosed in Japanese Laid-Open Patent Publication No. H11-50973 is considered to degrade the self-lubricating function in a case where the to-be-transferred object is a rubber composition.

The auxiliary groove 133 of the bush ring 130A has no opening on the gear side. Thus, the rubber composition R is inhibited from being discharged from the auxiliary groove 133 toward the gear. Therefore, as compared with the auxiliary passage 1200, an amount of the rubber composition R that enters the fitting portion at which the inner circumferential surface 135 and the support shaft 121 fit to each other is increased in the auxiliary groove 133. As a result, in a case where the to-be-transferred object is the rubber composition R, the gear pump 100 is considered to enhance the self-lubricating function as compared with the gear pump disclosed in Japanese Laid-Open Patent Publication No. H11-50973. Therefore, the gear pump 100 according to the first embodiment of the present invention can effectively inhibit the rubber composition from being burned onto the inner circumferential surface 135.

The rubber composition R as a lubricant which has entered the fitting portion at which the inner circumferential surface 135 and the support shaft 121 fit to each other is discharged on the side opposite to the gear side. In the gear pump 100, the rubber composition R discharged on the side opposite to the gear side is discarded as a waste product. The gear pump disclosed in Japanese Laid-Open Patent Publication No. H11-50973 has a circulation path formed by the passage 1100, and not illustrated circulation groove and circulation hole, and has a mechanism of returning the to-be-transferred object to a suction port (supply port H1). The rubber composition R used as a lubricant may be, for example, ground or burned at the fitting portion, and thus degraded. In the gear pump 100, the rubber composition R which has entered the fitting portion is not returned toward the gear, and discharged on the side opposite to the gear side. Therefore, the degraded rubber composition R is not mixed in the strip-shaped rubber member used for producing tires. As a result, by using the rubber member forming device 1 of the present embodiment, high-quality tires can be stably produced.

D1 illustrated in FIG. 4 represents a depth of each of the lubricating groove 132 and the auxiliary groove 133. D3 represents a diameter of the inner circumferential surface 135. The depth D1 is preferably greater than or equal to 1% of the diameter D3 and less than or equal to 3% thereof, and particularly preferably greater than or equal to 1.5% thereof and less than or equal to 2.5% thereof. For example, in a case where D3 is 50 mm, the depth D1 may be greater than or equal to 0.50 mm and less than or equal to 1.50 mm.

W1 illustrated in FIG. 5 represents a width of each of the lubricating groove 132 and the auxiliary groove 133. C represents a circumferential length of the inner circumferential surface 135. The width W1 is preferably greater than or equal to 3% of the length C and less than or equal to 5% thereof, and particularly preferably greater than or equal to 3.5% thereof and less than or equal to 4.5 % thereof. For example, in a case where the length C is 157 mm, the width W1 may be greater than or equal to 4.71 mm and less than or equal to 7.85 mm.

In a case where the lubricating groove 132 and the auxiliary groove 133 each have the depth D1 and the width W1 described above, the rubber composition R is smoothly introduced into the lubricating groove 132 and the auxiliary groove 133. In the bush ring 130 according to the present embodiment, the depth D1 and the width W 1 of the lubricating groove 132 are equal to the depth D1 and the width W 1, respectively, of the auxiliary groove 133. However, the present invention is not limited thereto. The depth D1 and the width W1 of the lubricating groove 132 may be different from the depth D1 and the width W1, respectively, of the auxiliary groove 133. From the viewpoint of facilitating production of the bush ring 130, the depth D1 and the width W1 of the lubricating groove 132 are preferably equal to the depth D1 and the width W 1, respectively, of the auxiliary groove 133.

L1 illustrated in FIG. 5 represents a length of the lubricating groove 132. W2 represents a width of the inner circumferential surface 135. The length L1 is preferably 60% to 90% of the width W2 and particularly preferably greater than or equal to 70% thereof and less than or equal to 80% thereof. For example, in a case where the width W2 is 40 mm, the length L1 may be greater than or equal to 24 mm and less than or equal to 36 mm. Thus, a region in which the rubber composition R introduced into the lubricating groove 132 can enter the fitting portion at which the inner circumferential surface 135 and the support shaft 121 fit to each other is assured. As a result, the rubber composition is effectively inhibited from being burned onto the inner circumferential surface 135.

L2 illustrated in FIG. 5 represents a length of the auxiliary groove 133. The length L2 is preferably 50% to 80% of the width W2, and particularly preferably greater than or equal to 60% thereof and less than or equal to 70% thereof. For example, in a case where the width W2 is 40 mm, the length L2 may be greater than or equal to 20 mm and less than or equal to 32 mm. Thus, a region in which the rubber composition R introduced into the auxiliary groove 133 can enter the fitting portion at which the inner circumferential surface 135 and the support shaft 121 fit to each other is assured. As a result, the rubber composition is effectively inhibited from being burned onto the inner circumferential surface 135.

D2 illustrated in FIG. 4 represents a depth of the connecting groove 134. W3 illustrated in FIG. 5 represents a width of the connecting groove 134. The depth D2 is preferably 30% to 70% of the depth D1 of the auxiliary groove 133, and particularly preferably greater than or equal to 40% thereof and less than or equal to 60% thereof. The width W3 is preferably 60% to 90% of the width W1 of the auxiliary groove 133, and is particularly preferably greater than or equal to 70% thereof and less than or equal to 80% thereof. That is, the depth D2 of the connecting groove 134 is less than the depth D1 of the auxiliary groove 133. The width W3 of the connecting groove 134 is less than the width W1 of the auxiliary groove 133. Thus, the rubber composition R introduced into the auxiliary groove 133 is inhibited from being returned from the introduction port H8 to the connecting groove 134. Therefore, an amount of the rubber composition R that is introduced into the auxiliary groove 133 and that enters the fitting portion at which the inner circumferential surface 135 and the support shaft 121 fit to each other is increased. As a result, the rubber composition is effectively inhibited from being burned onto the inner circumferential surface 135.

Y illustrated in FIG. 4 represents a position of the axis of the support shaft 121 in a state where the support shaft 121 has fitted to the inner circumferential surface 135. Z represents a reference position where a plane having, at both ends, the axis of the support shaft 121 of one of the pair of gears 120 and the axis of the support shaft 121 of the other of the pair of gears 120 intersects the inner circumferential surface 135 in a state where the bush ring 130A is fitted into the fitting opening H5. In FIG. 4, the reference position Z is at a position of 0° around the position Y An arrow A illustrated in each of FIG. 4 and FIG. 5 represents a direction in which the gear 120 rotates.

A position where the lubricating groove 132 is formed at the inner circumferential surface 135 is not particularly limited. In the first embodiment, the lubricating groove 132 is formed such that the center of the width W1 of the lubricating groove 132 is positioned on the inner circumferential surface 135 at a position where the central angle is 10° from the reference position Z in the arrow A direction around the position Y In the present embodiment, for example, the lubricating groove 132 is formed at the inner circumferential surface 135 such that the opening H6 is disposed at a position where the above-described central angle is greater than or equal to 0° and less than or equal to 20° in the arrow A direction.

The auxiliary groove 133 is most preferably formed at a position in the inner circumferential surface 135 near a load point described below. However, the position where the auxiliary groove 133 is formed is not limited to a position in the inner circumferential surface 135 near the load point. In the present embodiment, for example, the auxiliary groove 133 is formed such that the center of the width W1 of the auxiliary groove 133 is positioned on the inner circumferential surface 135 at a position where the central angle is 50° from the reference position Z in the direction opposite to the arrow A direction around the position Y The auxiliary groove 133 is preferably formed at the inner circumferential surface 135 at a position where the central angle is greater than or equal to 40° and less than or equal to 60° in the direction opposite to the arrow A direction.

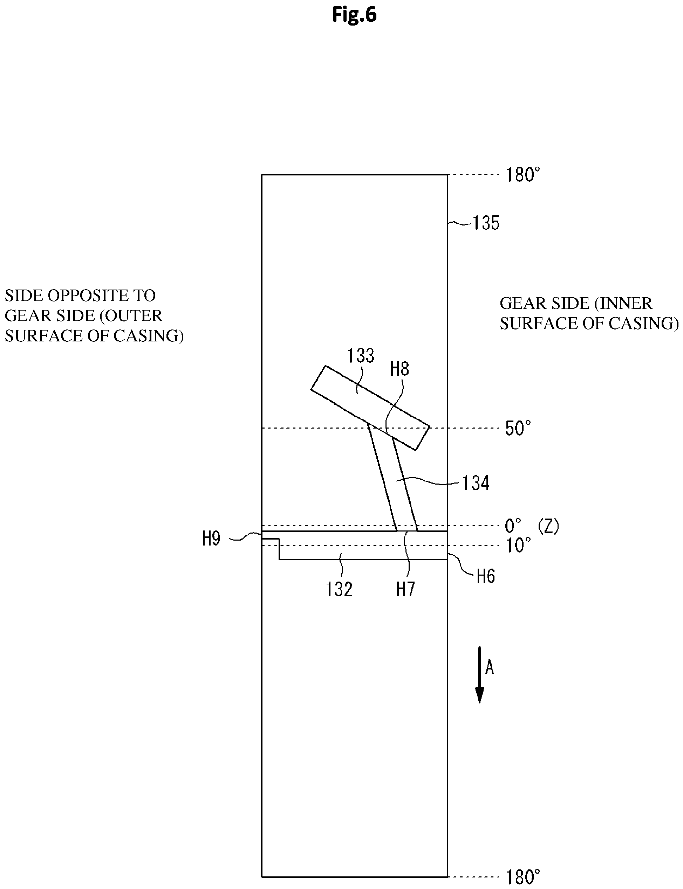

FIG. 6 is a schematic diagram illustrating, in a plan view, the inner circumferential surface 135 of the bush ring 130A according to a second embodiment of the present invention. The bush ring 130 according to the second embodiment is a modification of the bush ring 130 according to the first embodiment in which the lubricating groove 132, the auxiliary groove 133, and the connecting groove 134 are modified. Therefore, the components of the second embodiment other than the lubricating groove 132, the auxiliary groove 133, and the connecting groove 134 are the same as those of the first embodiment. The lubricating groove 132, the auxiliary groove 133, and the connecting groove 134 for the bush ring 130A according to the second embodiment will be described below.

In the bush ring 130A according to the first embodiment, the end of the lubricating groove 132 on the side opposite to the opening H6 side is disposed on the inner circumferential surface 135. Meanwhile, in the bush ring 130A according to the second embodiment, the end of the lubricating groove 132 on the side opposite to the opening H6 side is formed as a narrow groove opening denoted by H9 as described above in Japanese Laid-Open Patent Publication No. H11-50973. Thus, the rubber composition R that has aged in the lubricating groove 132 is discharged from the narrow groove opening H9. As described above, the rubber composition R does not easily enter the fitting portion at which the inner circumferential surface of the bush ring and the support shaft of the gear fit to each other, as compared with liquid such as water and oil. Therefore, in the bush ring 130A according to the second embodiment, a greater amount of the normal rubber composition R that can function as a lubricant may be discharged from the narrow groove opening H9 as compared with an amount of the rubber composition R having aged. Therefore, from the viewpoint of efficiently using the rubber composition R as a lubricant, the bush ring 130A which does not have the narrow groove opening H9 is preferable.

The auxiliary groove 133 of the bush ring 130A according to the first embodiment is formed so as to extend parallel to the lubricating groove 132. Meanwhile, the auxiliary groove 133 of the bush ring 130A according to the second embodiment extends so as to be inclined relative to the lubricating groove 132. From the viewpoint of facilitating production of the bush ring 130, the lubricating groove 132 and the auxiliary groove 133 are preferably formed so as to extend parallel to each other.

In the bush ring 130A according to the first embodiment, two connecting grooves 134 extend parallel to each other along the circumferential direction of the inner circumferential surface 135. Meanwhile, the bush ring 130A according to the second embodiment is configured to have one connecting groove 134. Furthermore, the connecting groove 134 of the second embodiment extends so as to be inclined relative to the circumferential direction of the inner circumferential surface 135. From the viewpoint of efficiently introducing the rubber composition R into the auxiliary groove 133, the number of the connecting grooves 134 of the bush ring 130A is preferably greater than or equal to two and less than or equal to four. From the viewpoint of facilitating production of the bush ring 130, the connecting groove 134 is preferably formed so as to extend along the circumferential direction of the inner circumferential surface 135.

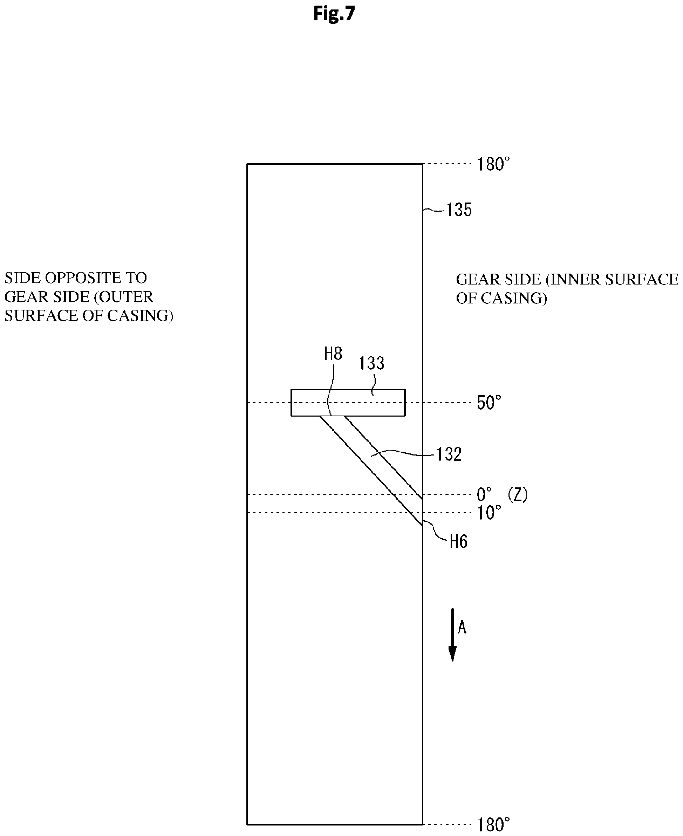

FIG. 7 is a schematic diagram illustrating, in a plan view, the inner circumferential surface 135 of the bush ring 130A according to a third embodiment of the present invention. Similarly to the bush ring 130 according to the second embodiment described above, the bush ring 130 according to the third embodiment is a modification of the bush ring 130 according to the first embodiment in which the lubricating groove 132, the auxiliary groove 133, and the connecting groove 134 are modified. The lubricating groove 132, the auxiliary groove 133, and the connecting groove 134 for the bush ring 130A according to the third embodiment will be described below.

The bush ring 130A according to the third embodiment is configured such that the lubricating groove 132 is directly connected to the auxiliary groove 133. More specifically, in the third embodiment, the end of the lubricating groove 132 on the side opposite to the opening H6 side is connected to the introduction port H8 and connected to the auxiliary groove 133. Therefore, the rubber composition R introduced from the opening H6 into the lubricating groove 132 is introduced into the auxiliary groove 133 from the introduction port H8 without passing through the connecting groove 134. As described above, the connecting groove 134 has a depth and a width that are less than those of the auxiliary groove 133. Thus, the rubber composition R is inhibited from being returned from the auxiliary groove 133 to the connecting groove 134. The lubricating groove 132 needs to introduce the rubber composition R used as a lubricant from the opening H6. Therefore, the lubricating groove 132 is preferably configured to have a depth and a width that are greater than those of the connecting groove 134. Therefore, the bush ring 130 according to the third embodiment is configured to easily return the rubber composition R from the auxiliary groove 133 to the lubricating groove 132. Accordingly, from the viewpoint of preventing the rubber composition from being burned onto the inner circumferential surface 135, the bush ring 130 preferably has the connecting groove 134.

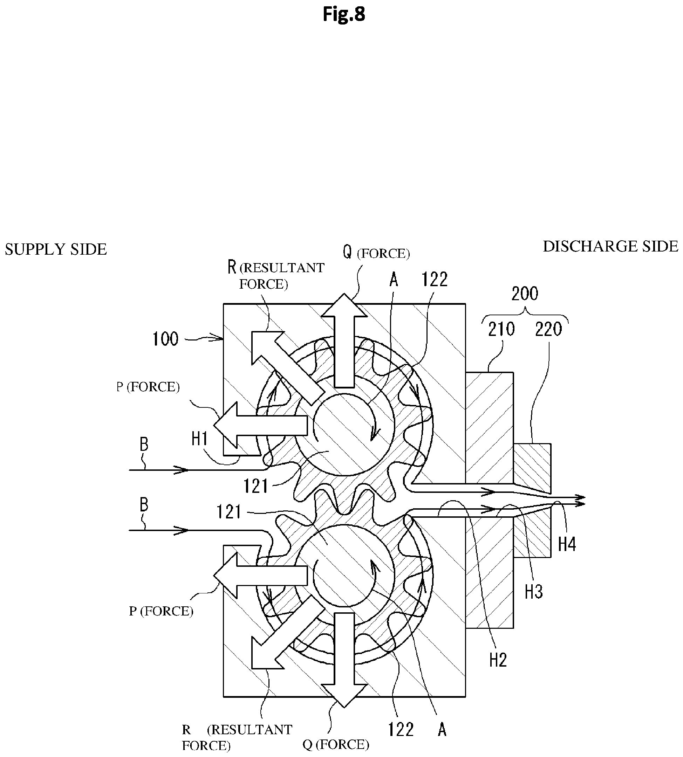

FIG. 8 illustrates the principle of a force acting on the support shaft 121 of the gear pump 100. In the gear pump 100, the rubber composition R is transferred in the direction of an arrow indicated by B by the pair of gears 120. That is, the rubber composition R flowing into the supply port H1 is sent to the discharge port H2, passes through the hole H3 of the body 210 of the head 200, and is discharged from the discharge outlet H4 of the outlet port 220. The opening of the discharge outlet H4 is narrower than the supply port H1. Therefore, in the gear pump 100, a low-pressure region is formed on the supply port H1 side, and a high-pressure region is formed on the discharge outlet H4 side. As a result, a force represented by P acts on the support shaft 121 from the discharge outlet H4 side toward the supply port H1. Moreover, when the rubber composition R is transferred by the teeth 122 toward the discharge port H2 side in the high-pressure region by rotation of the gears 120, a force, represented by Q, for separating the pair of gears 120 from each other acts on the support shaft 121. Therefore, a force, represented by R, resulting from addition of the force P and the force Q acts on the support shaft 121. As a result, the fitting portion to which the force R is applied and at which the inner circumferential surface 135 and the support shaft 121 fit to each other becomes a load point. A temperature tends to become high near the load point. Therefore, the rubber composition R is likely to be burned onto the inner circumferential surface 135 near the load point.

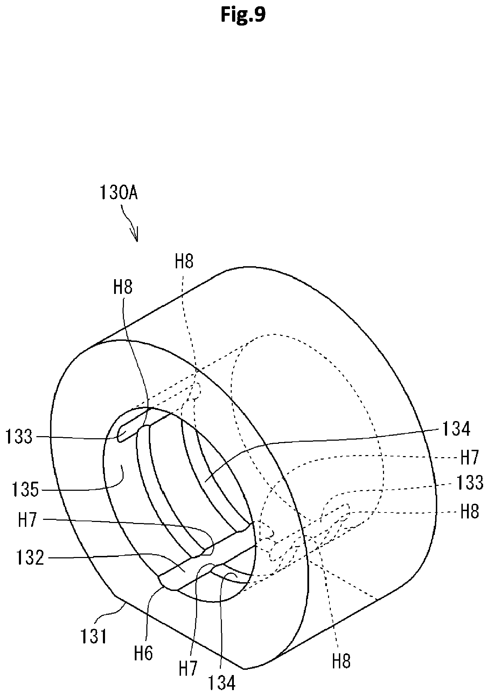

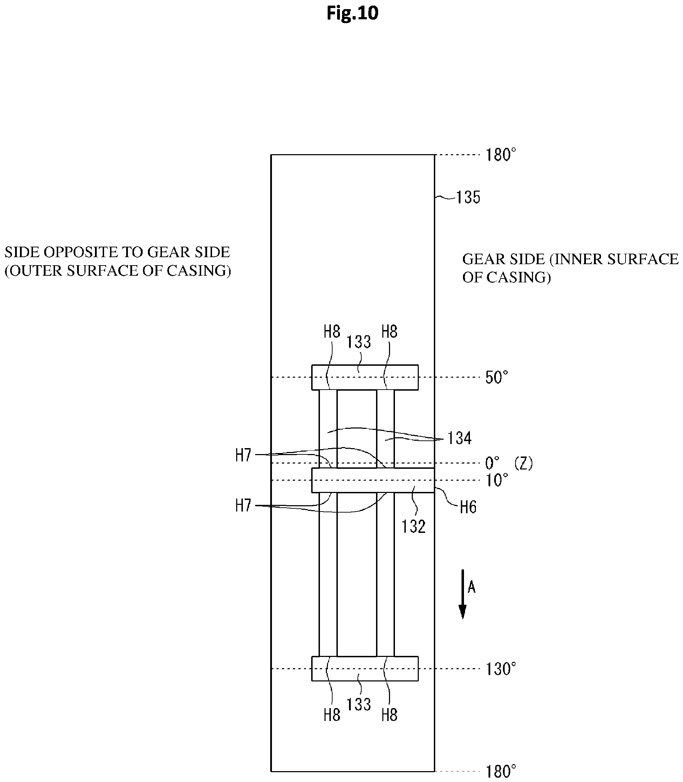

FIG. 9 is a schematic diagram of the bush ring 130A according to a fourth embodiment of the present invention. FIG. 10 is a schematic diagram illustrating, in a plan view, the inner circumferential surface 135 of the bush ring 130A according to the fourth embodiment of the present invention. As in the above-described second embodiment and third embodiment, the components of the fourth embodiment other than the lubricating groove 132, the auxiliary groove 133, and the connecting groove 134 are the same as those of the first embodiment.

The bush ring 130A according to the fourth embodiment further has the auxiliary groove 133 near the above-described load point in addition to the auxiliary groove 133 of the bush ring 130A according to the first embodiment. That is, the bush ring 130A according to the fourth embodiment has two auxiliary grooves 133. Each of the two connecting grooves 134 connects between the lubricating groove 132 and each of the two auxiliary grooves 133. Thus, the rubber composition R introduced from the opening H6 into the lubricating groove 132 is introduced from the introduction outlets H7 into the connecting grooves 134. The rubber composition R introduced into the connecting grooves 134 is introduced from the introduction ports H8 into the two auxiliary grooves 133.

Among the two auxiliary grooves 133, one of the auxiliary grooves 133 is formed at the same position as that in the first embodiment. The other of the auxiliary grooves 133 is formed such that the center of the width of the auxiliary groove 133 is positioned at a position where the central angle is 130° from the reference position Z in the arrow A direction around the above-described position Y The above-described load point is formed in many cases at such a position that the central angle is greater than or equal to 100° and less than or equal to 160°, and particularly greater than or equal to 120° and less than or equal to 140° from the reference position Z in the arrow A direction around the above described position Y in FIG. 10. Therefore, the auxiliary groove 133 is formed such that the central angle is preferably greater than or equal to 100° and less than or equal to 160° and particularly preferably greater than or equal to 120° and less than or equal to 140° from the reference position Z in the arrow A direction around the above-described position Y Thus, the rubber composition is effectively inhibited from being burned onto the inner circumferential surface 135.

Table 1 indicates results as to whether or not the rubber composition R was burned onto the inner circumferential surface 135 at each of different outlet pressure peaks after the rubber member forming device 1 was operated for about 300 hours. The outlet pressure peak is a value that indicates the largest value of a pressure applied to the outlet port 220 and that is measured by a pressure sensor disposed at the head 200. The outlet pressure peak varies depending on the hardness of the rubber composition R, the size of the discharge outlet H4 of the outlet port 220, and a rotation speed of the gear 120. The harder the rubber composition R is, the smaller the discharge outlet H4 is, and the higher the rotation speed is, the higher the outlet pressure peak becomes. The table indicates, in the cells in the column for the first embodiment, the results as to whether or not the rubber composition R was burned onto the inner circumferential surface 135 when the bush ring 130 of the first embodiment was used. The table indicates, in the cells in the column for the fourth embodiment, the results as to whether or not the rubber composition R was burned onto the inner circumferential surface 135 when the bush ring 130 of the fourth embodiment was used.

**[Table 1]**

| Outlet pressure peak (Mpa) | First embodiment | Fourth embodiment |
|---|---|---|
| 5.6 | not burned | not burned |
| 6.7 | not burned | not burned |
| 7.1 | not burned | not burned |
| 8.4 | not burned | not burned |
| 8.6 | not burned | not burned |
| 9 | not burned | not burned |
| 11.3 | not burned | not burned |
| 11.4 | Burned | not burned |
| 12.1 | Burned | not burned |
| 13.7 | Burned | not burned |
| 14.3 | Burned | not burned |

As indicated in Table 1, in the bush ring 130 of the first embodiment, the rubber composition R was burned onto the inner circumferential surface 135 under a condition that the outlet pressure peak was higher than or equal to 11.4 Mpa. Meanwhile, in the bush ring 130 of the fourth embodiment, the rubber composition R was not burned onto the inner circumferential surface 135 even under a condition that the outlet pressure peak was higher than or equal to 11.4 Mpa. Accordingly, it is clear that the bush ring 130, of the fourth embodiment, having the auxiliary groove 133 near the above-described load point can more effectively inhibit the rubber composition R from being burned onto the inner circumferential surface than the bush ring 130 of the first embodiment.

Side reinforcing rubber of a tire needs to bear the weight of a vehicle if the tire is punctured. Therefore, the rubber composition R used for the side reinforcing rubber is hard in many cases. As described above, the harder the rubber composition R is, the higher the outlet pressure peak is. Accordingly, the bush ring 130 having the auxiliary groove 133 near the above-described load point can be suitably used for the gear pump 100 for transferring the rubber composition R used for the side reinforcing rubber.

The technique of inhibiting a rubber composition from being burned onto an inner circumferential surface of a bush ring as described above is applicable to various gear pumps for rubber compositions and various rubber member forming devices.

## Claims

1. A gear pump (100) for a rubber composition (R), the gear pump (100) comprising:
a pair of gears (120) configured to transfer the rubber composition (R) and mesh with each other; and
a bush ring (130) configured to have an inner circumferential surface (135) and fit to a support shaft (121) of each of the gears (120) so as to allow the support shaft (121) to be rotatable, wherein
the inner circumferential surface (135) has a lubricating groove (132) and an auxiliary groove (133) for allowing the rubber composition (R) to enter a fitting portion at which the support shaft (121) and the inner circumferential surface (135) fit to each other,
the lubricating groove (132) has one end opened on the gear side in order to introduce the rubber composition (R), and
the auxiliary groove (133) has both ends on the inner circumferential surface (135), and has an introduction port (H8) that allows the rubber composition (R) to be introduced into the auxiliary groove (133) through the lubricating groove (132).

2. The gear pump (100) for a rubber composition (R) according to claim 1, wherein
the lubricating groove (132) extends in an axial direction of the support shaft (121) and has another end on the inner circumferential surface (135), and
the gear pump (100) further comprises a connecting groove (134) that connects between a part of the lubricating groove (132) and the introduction port (H8).

3. The gear pump (100) for a rubber composition (R) according to claim 2, wherein the number of the connecting grooves (134) is greater than or equal to two.

4. The gear pump (100) for a rubber composition (R) according to any one of claims 1 to 3, wherein
a reference position (Z) is a position, on the inner circumferential surface (135), at which a plane having, at both ends, an axis of the support shaft (121) of one of the pair of gears (120) and an axis of the support shaft (121) of the other of the pair of gears (120) intersects the inner circumferential surface (135), and
the auxiliary groove (133) is formed at the inner circumferential surface (135) at a position where a central angle is greater than or equal to 40° and less than or equal to 60°, around an axis of the support shaft (121) that fits to the inner circumferential surface (135), in a direction opposite to a direction (A) in which the gears (120) rotate, when the reference position (Z) represents 0°.

5. The gear pump (100) for a rubber composition (R) according to any one of claims 1 to 3, wherein
a reference position (Z) is a position, on the inner circumferential surface (135), at which a plane having, at both ends, an axis of the support shaft (121) of one of the pair of gears (120) and an axis of the support shaft (121) of the other of the pair of gears (120) intersects the inner circumferential surface (135), and
the auxiliary groove (133) is formed at the inner circumferential surface (135) at a position where a central angle is greater than or equal to 120° and less than or equal to 140°, around an axis of the support shaft (121) that fits to the inner circumferential surface (135), in a direction (A) in which the gears (120) rotate, when the reference position (Z) represents 0°.

6. The gear pump (100) for a rubber composition (R) according to any one of claims 1 to 5, wherein the number of the auxiliary grooves (133) is greater than or equal to two.

7. The gear pump (100) for a rubber composition (R) according to any one of claims 1 to 6, wherein the bush ring (130) is formed of four bush rings for fitting to four support shafts (121), respectively, of the pair of gears (120).

8. A rubber member forming device (1) for forming a strip-shaped rubber member used for producing a tire, the rubber member forming device (1) comprising:
an extruder (300);
the gear pump (100) for a rubber composition (R) according to any one of claims 1 to 7, the gear pump (100) being disposed downstream of the extruder (300); and
a head (200) disposed downstream of the gear pump (100) for a rubber composition (R), wherein
the extruder (300) has a screw (320), and the extruder (300) is configured to supply the rubber composition (R) toward the gear pump (100) for a rubber composition (R) while kneading the rubber composition (R), by rotating the screw (320), and
the head (200) has an outlet port (220), and the head (200) is configured to process the rubber composition (R) to form the strip-shaped rubber member by causing the rubber composition (R) to pass through the outlet port (220).
